# EUROPEAN PATENT SPECIFICATION

(11) **EP 3 926 943 B1**
(45) Date of publication and mention of the grant of the patent: **01.05.2024**
(21) Application number: 20814939.3
(22) Date of filing: 26.05.2020
(51) Int. Cl.: G03B 15/04, F21K 5/06, G03B 15/05, G03B 17/56, H04N 23/56, H04N 23/63, H04N 23/65, H04N 23/667, H04N 23/71, H04N 23/74

(54) **SUPPLEMENTARY LIGHTING CONTROL METHOD, SUPPLEMENTARY LIGHTING LAMP ACCESSORY, AND ELECTRONIC DEVICE**
VERFAHREN ZUR STEUERUNG VON ZUSATZBELEUCHTUNG, LAMPENZUBEHÖR FÜR ZUSATZBELEUCHTUNG UND ELEKTRONISCHE VORRICHTUNG
PROCÉDÉ DE COMMANDE D'ÉCLAIRAGE SUPPLÉMENTAIRE, ACCESSOIRE DE LAMPE D'ÉCLAIRAGE SUPPLÉMENTAIRE ET DISPOSITIF ÉLECTRONIQUE

(30) Priority: 30.05.2019 CN 201910464034
(43) Date of publication of application: 22.12.2021
(73) Proprietor: Huawei Technologies Co., Ltd., Shenzhen, Guangdong 518129 (CN)
(72) Inventor: CHEN, Shaojun, Shenzhen, Guangdong 518129 (CN); ZHUANG, Zhishan, Shenzhen, Guangdong 518129 (CN)
(74) Representative: Thun, Clemens
(86) International application number: PCT/CN2020/092226
(87) International publication number: WO 2020/238877

(56) References cited:
- US-A1- 2017 289 419
- Nikon Corporation: "Nikon SB-5000 User's Manual", , 1 January 2015 (2015-01-01), pages 1-128, XP055909506, Retrieved from the Internet: URL:https://download.nikonimglib.com/archi ve2/3spKZ005gLaX02UFTyx31HSEIk99/SB-5000UM _SG(En)02.pdf [retrieved on 2022-04-05]
- "ISO 518:2006, Photography, Camera accessory shoes, with and without electrical contacts, for photoflash lamps and electronic photoflash units, Specification", ISO International Standard, 15 May 2006 (2006-05-15), XP0009534858, Retrieved from the Internet: URL:https://www.iso.org/standard/36330.htm l [retrieved on 2022-04-06]

## Description

### TECHNICAL FIELD

This application relates to the field of computer technologies, and in particular, to an illuminator control method, an illuminator fitting, and an electronic device.

### BACKGROUND

Currently, an image-shooting apparatus is disposed in many electronic devices (for example, a mobile phone and a tablet computer). The electronic device may perform photographing by using the image-shooting apparatus.

In an actual application process, an illuminator fitting may be installed on an electronic device to improve a shooting effect of the electronic device. The illuminator fitting usually includes an illuminator and a control button (for example, a switch button or a brightness adjustment button) for controlling the illuminator. A user may control the illuminator by using the control button on the illuminator fitting, for example, control to turn on the illuminator or turn off the illuminator by using the switch button, or adjust brightness of the illuminator by using the brightness adjustment button. However, flexibility is poor in the illuminator control process.
The document US 2017/0289419 A1 shows a photo flash accessory for cameras. The flash accessory is connected to the camera by a physical connection and is supplied with power through this physical connection.
The document Nikon Corporation: "Nikon SB-5000 user's manual", XP055909506 is a user manual of a photo flash accessory intended for use with Nikon cameras. Although this photo flash accessory is connected to the camera using a physical connection, and supplied with power through this physical connection.
The document "ISO 518:2006, photography, camera accessory shoes, with and without electrical contacts, for photo flash lamps and electronic photo flash units specification", XP0009534858 is an international standardization document regarding physical connectors for connecting photo flash units to cameras. These connectors comprise electric contacts for supplying power to the photo flash unit from the camera.

### SUMMARY

The present invention is defined by the independent claims. Advantageous developments are shown by the dependent claims.

This application provides an illuminator control method according to appended claim 1, an illuminator fitting according to appended claim 5, and an electronic according to appended claim 9 to improve flexibility for controlling an illuminator.

### BRIEF DESCRIPTION OF DRAWINGS

FIG. 1A is a schematic diagram of a structure of an illuminator fitting according to an embodiment of this application;
FIG. 1B is a schematic diagram of a structure of another illuminator fitting according to an embodiment of this application;
FIG. 1C is a schematic diagram of a structure of still another illuminator fitting according to an embodiment of this application;
FIG. 2 is a schematic diagram of a structure of an electronic device according to an embodiment of this application;
FIG. 3 A and FIG. 3B are schematic diagrams of a process of collaboratively using an illuminator fitting and an electronic device according to an embodiment of this application;
FIG. 4 is a schematic flowchart of an illuminator control method according to an embodiment of this application;
FIG. 5 is a schematic flowchart of another illuminator control method according to an embodiment of this application;
FIG. 6 is a schematic diagram of a terminal interface according to an embodiment of this application;
FIG. 7 is a schematic diagram of another terminal interface according to an embodiment of this application;
FIG. 8 is a schematic diagram of still another terminal interface according to an embodiment of this application;
FIG. 9 is a schematic diagram of yet another terminal interface according to an embodiment of this application;
FIG. 10 is a schematic diagram of still yet another terminal interface according to an embodiment of this application;
FIG. 11A and FIG. 11B are schematic diagrams of an illuminator control process according to an embodiment of this application;
FIG. 12 is a schematic flowchart of still another illuminator control method according to an embodiment of this application;
FIG. 13 is a schematic diagram of a structure of an illuminator control apparatus according to an embodiment of this application;
FIG. 14 is a schematic diagram of a structure of another illuminator control apparatus according to an embodiment of this application;
FIG. 15 is a schematic diagram of a structure of another electronic device according to an embodiment of this application; and
FIG. 16 is a schematic diagram of a structure of still another electronic device according to an embodiment of this application.

### DESCRIPTION OF EMBODIMENTS

Embodiments of this application relate to an illuminator fitting and an electronic device. For ease of understanding, the illuminator fitting and the electronic device are first described.

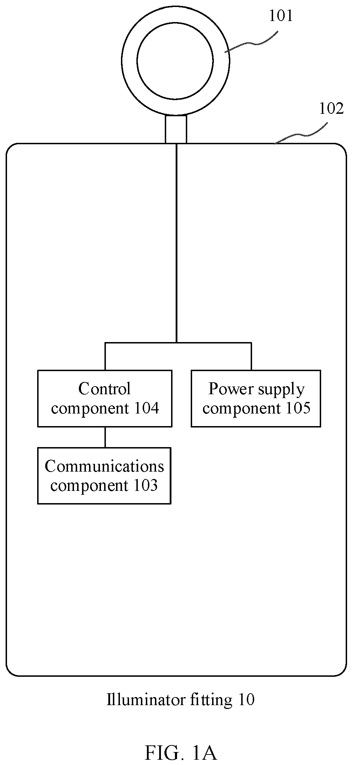

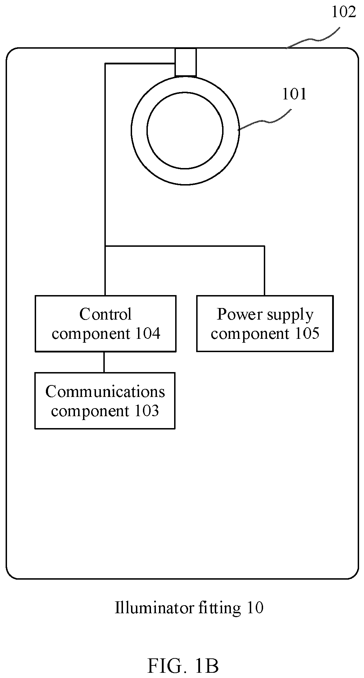

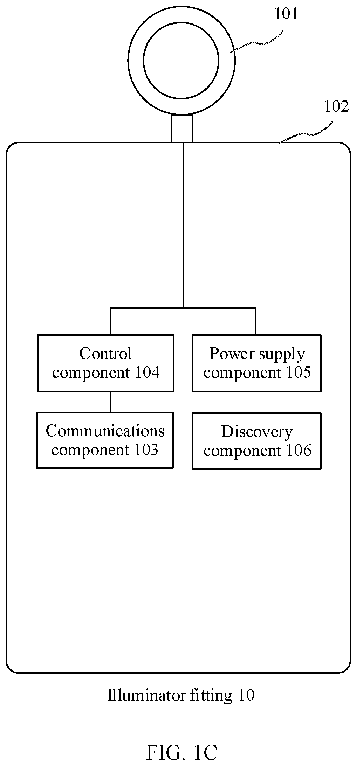

FIG. 1A is a schematic diagram of a structure of an illuminator fitting according to an embodiment of this application. FIG. 1B is a schematic diagram of a structure of another illuminator fitting according to an embodiment of this application. FIG. 1C is a schematic diagram of a structure of still another illuminator fitting according to an embodiment of this application. As shown in FIG. 1A, the illuminator fitting 10 includes an illuminator 101, a fixing component 102, a communications component 103, a control component 104, and a power supply component 105. The illuminator 101, the communications component 103, the control component 104, and the power supply component 105 are disposed on the fixing component 102, and the fixing component 102 is configured to be fastened to an electronic device.

Optionally, the illuminator 101 may emit light when the electronic device performs shooting, to improve a shooting effect of the electronic device. The illuminator 101 may be a light emitting diode (light emitting diode, LED) illuminator. A shape of the illuminator 101 may be a ring, a circular, a square, or the like. For ease of using and carrying, the illuminator 101 may rotate along the fixing member 102. For example, as shown in FIG. 1B, the illuminator 101 may rotate to an upper surface of the fixing member 102. For example, when shooting is performed by using a front-facing image-shooting apparatus of the electronic device, the illuminator 101 may rotate to a position shown in FIG. 1A; and when shooting is performed by using a rear-facing image-shooting apparatus of the electronic device, the illuminator 101 may rotate to a position shown in FIG. 1A, or the illuminator 101 may rotate to a position shown in FIG. 1B. Optionally, a flip structure (not shown in FIG. 1A to FIG. 1C) may be disposed in the illuminator fitting. The flip structure is separately connected to the illuminator 101 and the fixing component 102, and the illuminator 101 may be controlled, by using the flip structure, to rotate along the fixing component 102.

The component 102 is configured to be fastened to the electronic device, so that the illuminator fitting 10 is fastened to the electronic device. The fixing component 102 may be installed on the electronic device. For example, when the electronic device is a mobile phone, the fixing component 102 may be installed on a rear cover of the mobile phone.

Optionally, the communications component 103 may establish a communication connection to the electronic device, receive a control instruction that is sent by the electronic device and that is used to control the illuminator, and send the control instruction to the control component 104. The communications component 103 may be a near field communication (near field communication, NFC) component, a wireless charging transmission component, a Bluetooth communications component, a wireless fidelity (wireless fidelity, Wi-Fi) component, a mobile communications component, or the like. Optionally, the control instruction may further include an illuminator parameter. For example, the illuminator parameter may include at least one of the following: a mode of the illuminator and brightness of the illuminator.

The control component 104 is configured to control the illuminator. For example, the control component 103 may control a status (on or off), brightness, a light emitting mode, and the like of the illuminator 101. The control component 104 is configured to receive the control instruction that is sent by the communications component 103 and that is used to control the illuminator 101, and control the illuminator according to the control instruction. When the control instruction includes the illuminator parameter, the control component 104 may control the illuminator based on the illuminator parameter. The control component 104 may be a control chip. The control component 104 is further configured to control the power supply component 105. For example, the control component may control the power supply component to start/stop charging, or control the power supply component 105 to start/stop supplying power to the illuminator 101.

The power supply component 105 is configured to supply power to the illuminator 101. The power supply component 105 is configured to be a wireless charging component. For example, the wireless charging component may be a wireless charging coil. A wireless charging component in the electronic device is configured to charge the wireless charging component in the illuminator fitting 10. When a voltage of the wireless charging component in the illuminator fitting 10 reaches an operating voltage of the illuminator 101, the wireless charging component may supply power to the illuminator 101, to turn on the illuminator 101. The power supply component 105 may alternatively be a battery, and the battery may supply power to the illuminator. The power supply component 105 may further be a power supply cable. One end of the power supply cable is connected to the illuminator 101, and the other end of the power supply cable may be connected to a power supply interface of the electronic device, so that the electronic device supplies power to the illuminator through the power supply cable.

Optionally, as shown in FIG. 1C, the illuminator fitting 10 may further include a discovery component 106, and the electronic device may discover the illuminator fitting 10 based on the discovery component 106 in the illuminator fitting 10. The discovery component 106 may include a magnetic field sensor and/or an NFC component. The magnetic field sensor may transmit a magnetic field signal. For example, the magnetic field sensor may be a Hall effect sensor.

The discovery component 106 includes the magnetic field sensor. A magnetic field sensor may also be disposed in the electronic device. The electronic device may detect the magnetic field signal by using the magnetic field sensor in the electronic device. After the magnetic field sensor in the electronic device detects the magnetic field signal, the electronic device may determine that the illuminator fitting 10 is discovered. Optionally, after the magnetic field sensor in the electronic device detects the magnetic field signal, the electronic device may further display a plurality of possible identifiers (for example, device names) of devices having a magnetic field sensor. A user may select a device identifier from the electronic device based on an actual situation. When the device identifier selected by the user is a device identifier of the illuminator fitting, the electronic device may determine that the illuminator fitting 10 is discovered.

The discovery component 106 includes the NFC component. An NFC component may also be disposed in the electronic device. The electronic device may read NFC information (for example, information about a device in which an NFC component is located) by using the NFC component in the electronic device. After the NFC information is read by using the NFC component in the electronic device, if the NFC information indicates information about the illuminator fitting 10, the electronic device may determine that the illuminator fitting 10 is discovered.

The discovery component 106 includes the magnetic field sensor and the NFC component. A magnetic field sensor and an NFC component may also be disposed in the electronic device. After the magnetic field sensor in the electronic device detects the magnetic field signal, the electronic device may read NFC information by using the NFC component in the electronic device. After the NFC information is read by using the NFC component in the electronic device, if the NFC information indicates information about the illuminator fitting 10, the electronic device may determine that the illuminator fitting 10 is discovered.

It should be noted that FIG. 1A to FIG. 1C merely show examples of the illuminator fitting 10, but do not constitute limitations on a structure of the illuminator fitting 10. Certainly, in an actual application process, a structure of the illuminator fitting 10 may be set according to an actual requirement.

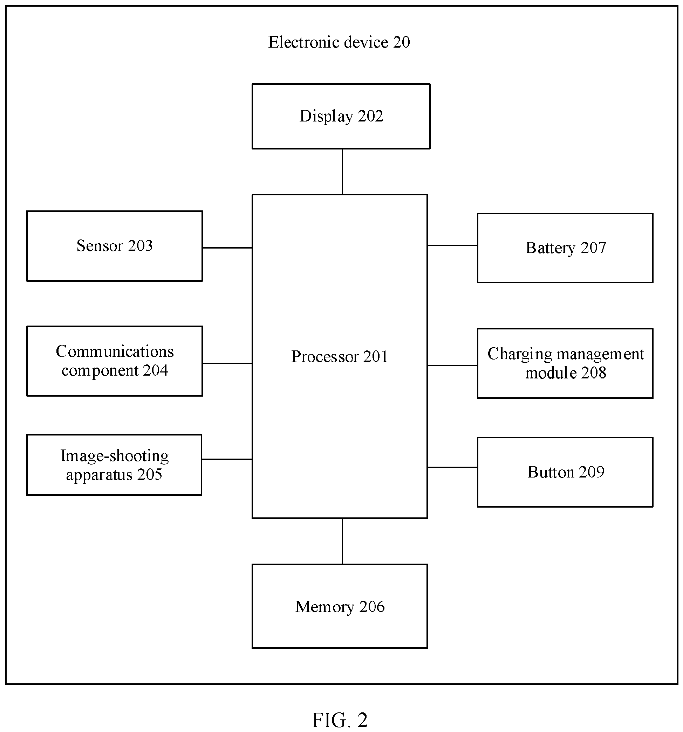

FIG. 2 is a schematic diagram of a structure of an electronic device according to an embodiment of this application. As shown in FIG. 2, the electronic device 20 may include a processor 201, a display 202, a sensor 203, a communications component 204, an image-shooting apparatus 205, a memory 206, a battery 207, a charging management component 208, and a button 209. The electronic device 20 may be a device having a shooting function, such as a mobile phone, a tablet computer, or a camera.

Optionally, the processor 201 may include one or more processing units. For example, the processor 201 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 20 may alternatively include one or more processors 201. The controller may be a nerve center and a command center of the electronic device 20. The controller may generate an operation control signal based on instruction operation code and a time sequence signal, to complete control of instruction reading and instruction execution. A memory may be further disposed in the processor 201, and is configured to store an instruction and data. In some embodiments, the memory in the processor 201 is a cache. The memory may store an instruction or data that has been used or is cyclically used by the processor 201. If the processor 201 needs to use the instruction or the data again, the processor may directly invoke the instruction or the data from the memory. In this way, repeated access is avoided, waiting time of the processor 201 is reduced, and processing efficiency of the electronic device 20 is improved.

Optionally, the display 202 is configured to display an image, a video, and the like. The display 202 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini-LED, a Micro-LED, a Micro-OLED, a quantum dot light emitting diode (quantum dot light emitting diode, QLED), or the like. In some embodiments, the electronic device 20 may include one or N displays 194, where N is a positive integer greater than 1. Optionally, the electronic device 20 may implement a display function by using the GPU, the display 202, the application processor, and the like. The GPU is a microprocessor for image processing, and is connected to the display 202 and the application processor. The GPU is configured to: perform mathematical and geometric calculation, and render an image. The processor 201 may include one or more GPUs that execute instructions to generate or change display information.

Optionally, the sensor 203 may include a touch sensor, an ambient optical sensor, a magnetic field sensor, and the like. The touch sensor may be disposed on the display, and the touch sensor and the display 202 form a touchscreen, which is also referred to as a "touch screen". The touch sensor is configured to detect a touch operation performed on or near the touch sensor. The touch sensor may transfer the detected touch operation to the application processor, to determine a type of a touch event. A visual output related to the touch operation may be provided on the display 202. The touch sensor may alternatively be disposed on a surface of the electronic device 20 at a position different from a position of the display 202. The touch sensor may also be referred to as a touch panel or a touch-sensitive surface. The ambient optical sensor is configured to sense ambient luminance, and feed back the ambient luminance to the processor 201, so that the processor 201 performs corresponding processing based on the ambient luminance. Certainly, the sensor 203 may further include another sensor, for example, a pressure sensor, a gyroscope sensor, a barometric pressure sensor, an acceleration sensor, a distance sensor, an optical proximity sensor, a fingerprint sensor, a temperature sensor, or a bone conduction sensor.

Optionally, the communications component 204 may establish a communication connection to an illuminator fitting 10 (or a communications component in an illuminator fitting 10) and communicates with the illuminator fitting 10. For example, the communications component 204 may be an NFC component, a wireless charging transmission component, a Bluetooth communications component, a Wi-Fi component, a mobile communications component, or the like.

Optionally, the image-shooting apparatus 205 may be a camera, and has a function of shooting a video and/or an image. The electronic device 20 may implement a shooting function by using the ISP, one or more image-shooting apparatuses 205, the video codec, the GPU, one or more displays, the application processor, and the like.

Optionally, the memory 206 may be configured to store one or more computer programs, and the one or more computer programs include instructions. The processor 201 may run the instructions stored in the internal memory 206. The memory 206 may include a program storage area and a data storage area. The program storage area may store an operating system. The program storage area may further store one or more applications (for example, "Gallery" and "Contacts"), and the like. The data storage area may store data (for example, a photo and a contact) created during use of the electronic device 20, and the like. In addition, the memory may include a high-speed random access memory, and may further include a nonvolatile memory, for example, at least one magnetic disk storage device, a flash memory device, or a universal flash storage (universal flash storage, UFS).

Optionally, the charging management component 208 may be connected to the battery 207, and may receive a charging input from a charger. The charger may be a wireless charger or a wired charger. In some embodiments of wired charging, the charging management component 208 may receive a charging input from a wired charger through a USB port. In some embodiments of wireless charging, the charging management component 208 may receive a wireless charging input through a wireless charging coil of the electronic device 20. The charging management component 208 may further control the battery to perform reverse charging to a wireless charging coil in the illuminator fitting 10 by using the wireless charging coil.

Optionally, the buttons 209 include a power button, a shooting button, a volume button, and the like. The button 209 may be a mechanical button or a touch-sensitive button. The electronic device 20 may receive a button input, and generate a button signal input related to a user setting and function control of the electronic device 20.

Certainly, the electronic device 20 may further include another component, for example, an external memory interface, a USB port, an antenna, an audio component, a speaker, a receiver, a microphone, a headset jack, a motor, an indicator, or a subscriber identity module (subscriber identity module, SIM) card interface. It should be noted that FIG. 2 merely shows an example of the structure of the electronic device 20, but does not constitute a limitation on a structure of the electronic device 20. In an actual application process, a structure of the electronic device 20 may be set according to an actual requirement. This is not specifically limited in this embodiment of this application.

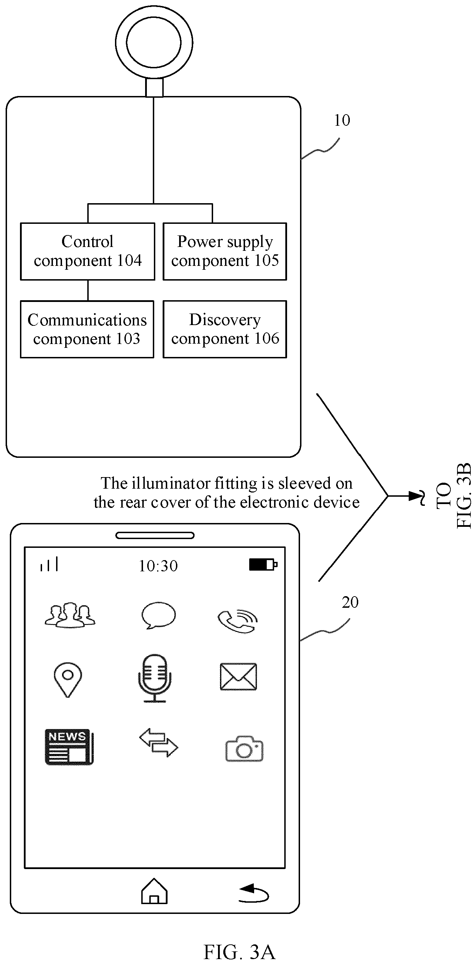

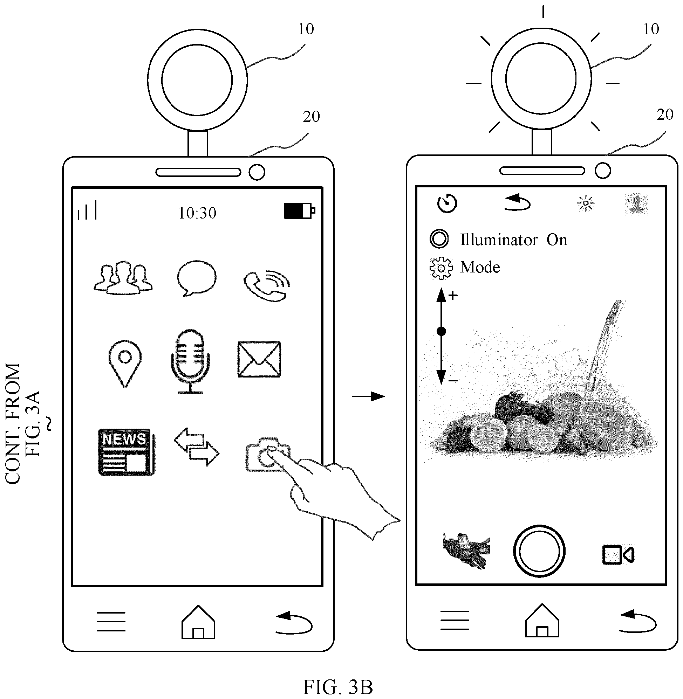

With reference to FIG. 3A and FIG. 3B, that an electronic device is a mobile phone is used as an example below to describe a manner of collaboratively using an illuminator fitting and the electronic device.

FIG. 3A and FIG. 3B are schematic diagrams of a process of collaboratively using the illuminator fitting and the electronic device according to an embodiment of this application. As shown in FIG. 3A and FIG. 3B, the illuminator fitting 10 and the electronic device 20 are included. A fixing component of the illuminator fitting 10 matches a shape of a rear cover of the electronic device 20, so that the fixing component of the illuminator fitting 10 may be installed on the rear cover of the electronic device 20. After the illuminator fitting 10 is installed on the electronic device 20, a user may control to start an image-shooting apparatus in the electronic device 20. After the image-shooting apparatus in the electronic device 20 is started, the electronic device 20 may display a shooting interface, and control to turn on an illuminator in the illuminator fitting 10. The electronic device may further control illumination brightness, an illumination mode, and the like of an illuminator, to improve a shooting effect of the image-shooting apparatus.

Specific embodiments are used below to describe in detail the technical solutions of this application. It should be noted that the following embodiments may exist alone or may be combined with each other. Same or similar content is not repeatedly described in different embodiments.

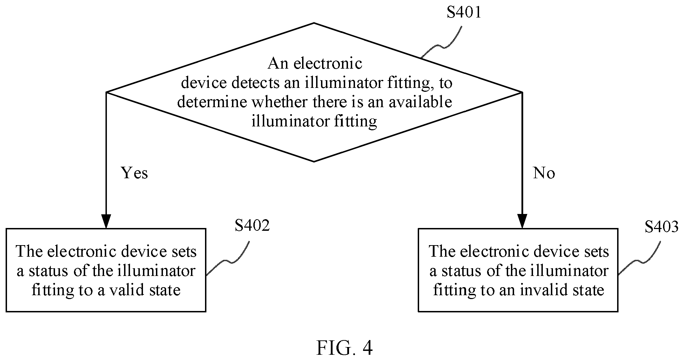

FIG. 4 is a schematic flowchart of an illuminator control method according to an embodiment of this application. Refer to FIG. 4. The method may include the following steps.

S401: An electronic device detects an illuminator fitting, to determine whether there is an available illuminator fitting.

If there is the available illuminator fitting, S402 is performed.

If there is no available illuminator fitting, S403 is performed.

Optionally, the electronic device may periodically detect the illuminator fitting. For example, the electronic device may detect the illuminator fitting every 2 seconds. Alternatively, the electronic device may detect the illuminator fitting in real time. Alternatively, the electronic device may detect the illuminator fitting after being triggered by a user. For example, the electronic device detects the illuminator fitting after receiving a preset instruction entered by the user.

Optionally, the electronic device may detect the illuminator fitting in the following feasible implementations.

In a feasible implementation, a magnetic field sensor may be disposed in each of the electronic device and the illuminator fitting, and the electronic device may detect the illuminator fitting by using a signal collected by the magnetic field sensor. Optionally, the magnetic field sensor may be a Hall effect sensor.

In an actual application process, when a distance between the illuminator fitting and the electronic device is less than a first preset distance, the magnetic field sensor in the electronic device may detect a magnetic field signal of the magnetic field sensor in the illuminator fitting, and the electronic device may further determine that there is the available illuminator fitting.

Optionally, after the magnetic field sensor in the electronic device detects the magnetic field signal, the electronic device may further display a plurality of possible identifiers (for example, device names) of devices having a magnetic field sensor. The user may select a device identifier from the electronic device based on an actual situation. When the device identifier selected by the user is a device identifier of the illuminator fitting, the electronic device may determine that the illuminator fitting is discovered.

In this feasible implementation, the magnetic field sensor is disposed in each of the electronic device and the illuminator fitting, so that the electronic device can detect whether there is the available illuminator fitting. A process is simple and convenient, and costs are relatively low.

In another feasible implementation, an NFC component may be disposed in each of the electronic device and the illuminator fitting, and the electronic device may detect the illuminator fitting by using NFC information collected by the NFC component.

In an actual application process, the NFC component in the illuminator fitting may send the NFC information, and the NFC component in the electronic device may receive the NFC information, where the NFC information may include information about the illuminator fitting. When a distance between the illuminator fitting and the electronic device is less than a second preset distance, the NFC component in the electronic device may receive the NFC information sent by the NFC component in the illuminator fitting. Correspondingly, when the NFC information received by the NFC component in the electronic device is used to indicate the illuminator fitting, the electronic device may determine that there is the available illuminator fitting. Optionally, the electronic device may further determine, based on the NFC information, whether the illuminator fitting matches the electronic device. When determining that the illuminator fitting matches the electronic device, the electronic device may determine that there is the available illuminator fitting.

In this feasible implementation, the electronic device can accurately determine, based on the received NFC information, whether there is the available illuminator fitting.

In still another feasible implementation, a magnetic field sensor and an NFC component are disposed in each of the electronic device and the illuminator fitting. The electronic device may detect a magnetic field signal by using the magnetic field sensor in the electronic device. After the magnetic field sensor in the electronic device detects the magnetic field signal, the NFC component in the electronic device reads NFC information sent by the NFC component in the illuminator fitting, where the NFC information is used to indicate information about the illuminator fitting. The electronic device determines whether the NFC information indicates the illuminator fitting. If the NFC information indicates the illuminator fitting, the electronic device determines that the available illuminator fitting is detected. If the NFC information does not indicate the illuminator fitting, the electronic device determines that no available illuminator fitting is detected.

In this feasible implementation, the electronic device first performs preliminary device discovery based on the magnetic field signal. After the electronic device determines, based on the magnetic field signal, that a device having a magnetic field sensor is discovered, the electronic device reads the NFC information by using the NFC component, and determines, based on the NFC information, whether the illuminator fitting is discovered. In this way, the device having the magnetic field sensor can be discovered in time by using the magnetic field sensor. After the device having the magnetic field sensor is discovered, whether there is the available illuminator fitting can be accurately determined based on the NFC component. This can discover the illuminator fitting in time and further improve accuracy for discovering the illuminator fitting.

In yet another feasible implementation, after the user installs the illuminator fitting on the electronic device, the user may input a preset instruction to the electronic device. Correspondingly, after obtaining the preset instruction, the electronic device may determine that the illuminator fitting is detected.

For example, the user may perform a pressing operation on a preset button of the electronic device. After the electronic device detects the pressing operation on the preset button, the electronic device determines that the available illuminator fitting is detected. For example, the user may perform a tap operation on a preset icon in a preset interface of the electronic device. After the electronic device detects the tap operation on the preset icon, the electronic device determines that the available illuminator fitting is detected.

In this feasible implementation, the user may control, according to an actual requirement, whether the illuminator fitting can be discovered. Therefore, flexibility for using the illuminator fitting is relatively high.

In still yet another implementation, a first interface is disposed in the illuminator fitting, and a second interface is disposed in the electronic device. After the user installs the illuminator fitting on the electronic device, the user may connect the first interface to the second interface. For example, the first interface may be a plug, and the second interface may be a jack. Correspondingly, when detecting the first interface of the illuminator fitting through the second interface, the electronic device determines that there is the available illuminator fitting.

In this feasible implementation, the electronic device can determine, based on a connection between physical components, that the available illuminator fitting is detected. Therefore, it is highly convenient to detect whether there is the available illuminator fitting.

It should be noted that the foregoing implementations are merely example manners in which the electronic device detects the illuminator fitting. Certainly, the electronic device may alternatively detect, in another feasible implementation, whether there is the available illuminator fitting. This is not specifically limited in this embodiment of this application.

S402: The electronic device sets a status of the illuminator fitting to a valid state.

Optionally, the electronic device may set the status of the illuminator fitting to the valid state in the following feasible implementations:

In one feasible implementation, a status bit of the illuminator fitting is stored in first preset storage space of the electronic device. When the electronic device detects that there is the available illuminator fitting, the electronic device may set the status bit of the illuminator fitting to a first preset value, where the first preset value is used to indicate that the status of the illuminator fitting is the valid state. For example, after the electronic device detects that there is the available illuminator fitting, the electronic device may determine whether the status bit of the illuminator fitting is the first preset value. If the status bit of the illuminator fitting is the first preset value, the electronic device does not modify the status bit of the illuminator fitting. If the status bit of the illuminator fitting is not the first preset value, the electronic device modifies the status bit of the illuminator fitting to the first preset value.

In another feasible implementation, after the electronic device detects that there is the available illuminator fitting, the electronic device may write an illuminator fitting flag bit into second preset storage space, where the second preset storage space includes the illuminator fitting flag bit used to indicate that there is the illuminator fitting available to the electronic device. For example, after the electronic device detects that there is the available illuminator fitting, the electronic device may determine whether there is the illuminator fitting flag bit in the second preset storage space. If there is the illuminator fitting flag bit in the second preset storage space, the electronic device does not write the illuminator fitting flag bit into the second preset storage space. If there is no illuminator fitting flag bit in the second preset storage space, the electronic device writes the illuminator fitting flag bit into the second preset storage space.

The wireless charging component is disposed in the illuminator fitting, and the wireless charging component is configured to supply power to an illuminator in the illuminator fitting. The wireless charging component is disposed in the illuminator fitting, so that the electronic device can conveniently and quickly charge the wireless charging component in the illuminator fitting, and the wireless charging component can further supply power to the illuminator. Because a size of the wireless charging component is relatively small, an overall size of the illuminator fitting is small.

In this case, after the electronic device determines that there is the available illuminator fitting, the electronic device may pre-charge the illuminator fitting, to increase a voltage of the wireless charging component to an operating voltage of the illuminator. The operating voltage of the wireless charging component has been increased to the operating voltage of the illuminator. When the electronic device determines to turn on the illuminator, the illuminator can be quickly turned on, and therefore a delay in turning on the illuminator is relatively small.

For example, the electronic device may set a wireless charging component in the electronic device to be in a reverse charging mode, so that the wireless charging component in the electronic device can perform reverse charging on the wireless charging component in the illuminator fitting.

S403: The electronic device sets a status of the illuminator fitting to an invalid state.

Optionally, the electronic device may set the status of the illuminator fitting to the invalid state in the following feasible implementations:
In a feasible implementation, a status bit of the illuminator fitting is stored in first preset storage space of the electronic device. When the electronic device detects that there is no available illuminator fitting, the electronic device may set the status bit of the illuminator fitting to a second preset value, where the second preset value is used to indicate that the status of the illuminator fitting is the invalid state. For example, after the electronic device detects that there is the available illuminator fitting, the electronic device may determine whether the status bit of the illuminator fitting is the second preset value. If the status bit of the illuminator fitting is the second preset value, the electronic device does not modify the status bit of the illuminator fitting. If the status bit of the illuminator fitting is not the second preset value, the electronic device modifies the status bit of the illuminator fitting to the second preset value.

In another feasible implementation, after the electronic device detects that there is no available illuminator fitting, the electronic device may clear (delete) an illuminator fitting flag bit in second preset storage space. When the second preset storage space does not include an illuminator fitting flag bit, it indicates that the status of the illuminator fitting is the invalid state. For example, after the electronic device detects that there no available illuminator fitting, the electronic device may determine whether there is an illuminator fitting flag bit in the second preset storage space. If there is the illuminator fitting flag bit in the second preset storage space, the electronic device deletes the illuminator fitting flag bit in the second preset storage space. If there is no illuminator fitting flag bit in the second preset storage space, the electronic device does not write an illuminator fitting flag bit into the second preset storage space.

In the embodiment shown in FIG. 4, the electronic device may detect whether there is the available illuminator fitting. If the available illuminator fitting is detected, the electronic device sets the status of the illuminator fitting to the valid state. If no available illuminator fitting is detected, the electronic device sets the status of the illuminator fitting to the invalid state. In this way, after the electronic device starts an image-shooting apparatus, the electronic device can determine, based on the status of the illuminator fitting, whether there is the available illuminator fitting. Therefore, the electronic device can quickly determine whether there is the available illuminator fitting.

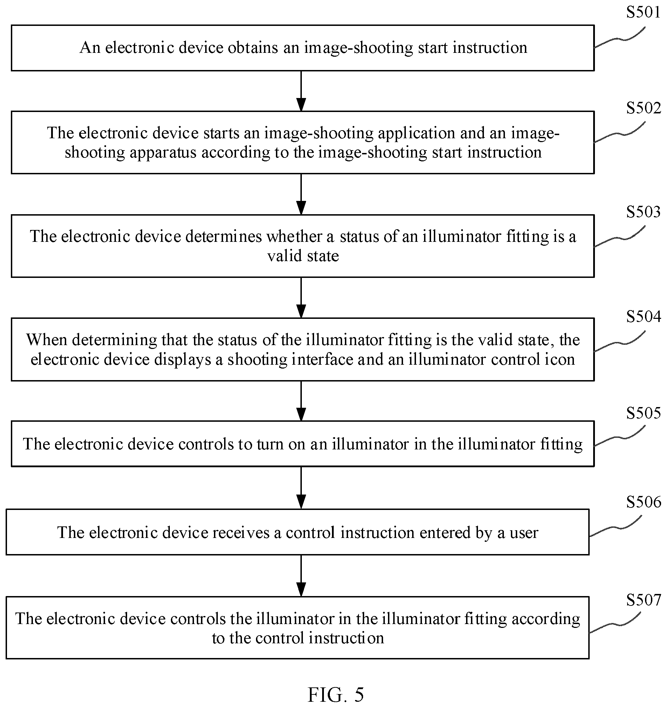

Based on any one of the foregoing embodiments, the following describes, with reference to FIG. 5, a process in which an electronic device controls an illuminator fitting.

FIG. 5 is a schematic flowchart of another illuminator control method according to an embodiment of this application. Refer to FIG. 5. The method may include the following steps.

S501: The electronic device obtains an image-shooting start instruction.

The image-shooting start instruction is used to indicate to start an image-shooting application and an image-shooting apparatus on the electronic device.

Optionally, the image-shooting start instruction may be obtained in the following feasible implementations:
In a feasible implementation, the image-shooting application corresponding to the image-shooting apparatus is installed on the electronic device. A user may perform a tap operation on an icon of the image-shooting application, and the electronic device generates the image-shooting start instruction based on the tap operation performed by the user on the icon of the image-shooting application.

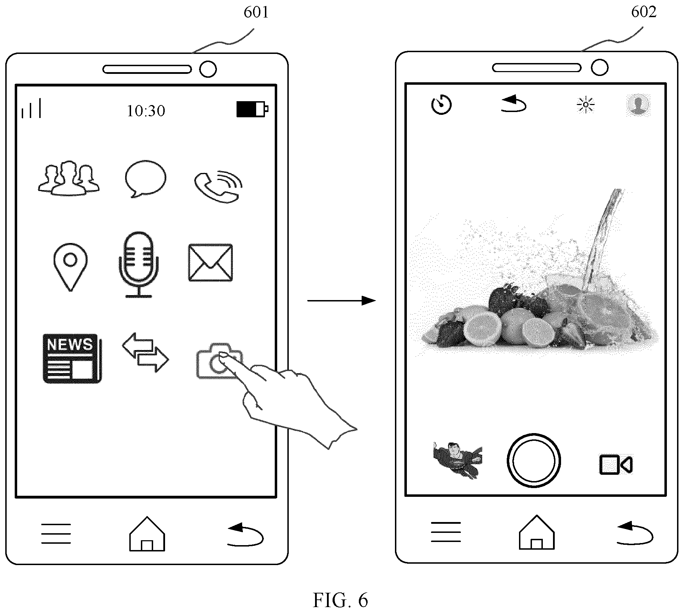

With reference to FIG. 6, the following describes this feasible implementation by using an example in which the electronic device is a mobile phone.

FIG. 6 is a schematic diagram of a terminal interface according to an embodiment of this application. As shown in FIG. 6, an interface 601 and an interface 602 are included.

Refer to the interface 601. An image-shooting application is installed on the mobile phone, and an icon of the image-shooting application is displayed on a screen of the mobile phone. When the user needs to start an image-shooting apparatus for shooting, the user may perform a tap operation on the icon of the photographing application.

Refer to the interface 602. After the mobile phone obtains the tap operation performed by the user on the icon of the image-shooting application, the mobile phone may generate an image-shooting start instruction, and start the image-shooting apparatus according to the image-shooting start instruction.

In another feasible implementation, another application other than the image-shooting application may be installed on the electronic device, and the another application may invoke the image-shooting application, to start the image-shooting apparatus in a running process of the another application. For example, a display page of the another application may include an icon for invoking the image-shooting application. A user may perform a tap operation on the invoking icon. The electronic device may generate the image-shooting start instruction based on the tap operation performed by the user on the invoking icon.

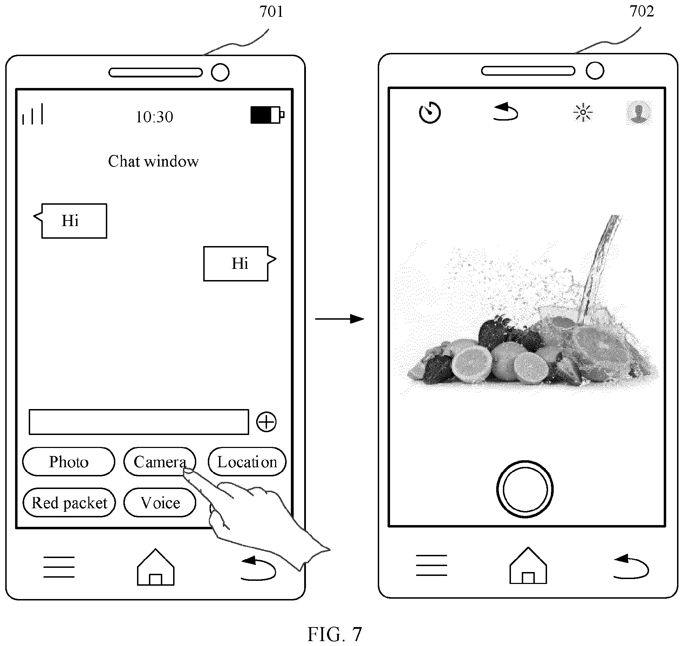

With reference to FIG. 7, the following describes this feasible implementation by using an example in which the electronic device is a mobile phone.

FIG. 7 is a schematic diagram of another terminal interface according to an embodiment of this application. As shown in FIG. 7, an interface 701 and an interface 702 are included.

Refer to the interface 701. A chat application is installed on the mobile phone, and an invoking icon, namely, a "Camera" icon, for invoking an image-shooting application is included in a chat interface. When the user needs to add a to-be-shot picture to chat content, the user may perform a tap operation on the "Camera" icon.

Refer to the interface 702. After the mobile phone obtains the tap operation performed by the user on the icon of the "Camera" icon, the mobile phone may generate an image-shooting start instruction, and start an image-shooting apparatus according to the image-shooting start instruction.

In still another implementation, a user may perform a pressing operation on a preset physical button on the electronic device. After obtaining the pressing operation corresponding to the preset physical button, the electronic device generates the image-shooting start instruction.

Certainly, the electronic device may alternatively obtain the image-shooting start instruction in another feasible implementation. This is not specifically limited in this embodiment of this application.

S502: The electronic device starts the image-shooting application and the image-shooting apparatus according to the image-shooting start instruction.

Optionally, the image-shooting application and the image-shooting apparatus may be started at the same time.

Optionally, one or more image-shooting applications may be installed on the electronic device. When one image-shooting application is installed on the electronic device, the electronic device starts the image-shooting application. When a plurality of image-shooting applications are installed on the electronic device, the electronic device may determine, according to the obtained image-shooting start instruction, a to-be-started image-shooting application. For example, the image-shooting start instruction may include an identifier of the to-be-started image-shooting application. The electronic device may start a corresponding image-shooting application based on the identifier of the to-be-started image-shooting application.

S503: The electronic device determines whether a status of an illuminator fitting is a valid state.

Optionally, the electronic device may obtain a status bit of the illuminator fitting stored in first preset storage space, and determine, based on a value of the status bit, whether the status of the illuminator fitting is the valid state. For example, when the status bit of the illuminator fitting stored in the first preset storage space is a first preset value, the electronic device determines that the status of the illuminator fitting is the valid state. When the status bit of the illuminator fitting stored in the first preset storage space is a second preset value, the electronic device determines that the status of the illuminator fitting is an invalid state.

Optionally, the electronic device may determine whether an illuminator fitting flag bit is stored in second preset storage space. If the illuminator fitting flag bit is stored in the second preset storage space, the electronic device determines that the status of the illuminator fitting is the valid state. If the illuminator fitting flag bit is not stored in the second preset storage space, the electronic device determines that the status of the illuminator fitting is an invalid state.

When determining that the status of the illuminator fitting is the valid apparatus, the electronic device determines that there is an available illuminator fitting. When determining that the status of the illuminator fitting is the invalid apparatus, the electronic device determines that there is no available illuminator fitting.

It should be noted that S502 and S503 may be performed sequentially, or may be performed in parallel. A sequence of performing S502 and S503 is not specifically limited in this application.

S504: When determining that the status of the illuminator fitting is the valid state, the electronic device displays a shooting interface and an illuminator control icon.

Optionally, the shooting interface is an interface of the image-shooting application installed on the electronic device.

Optionally, the illuminator control icon may include at least one of the following icons:
An illuminator status icon: The user may perform an operation on the illuminator status icon to control to turn on or turn off an illuminator.

An illuminator mode icon: The user may perform an operation on the illuminator mode icon to select a mode of the illuminator. For example, the mode of the illuminator may include a warm light mode or a cold light mode.

An illuminator brightness icon: The user may perform an operation on the illuminator brightness icon to determine brightness of the illuminator.

Optionally, the electronic device may display the shooting interface and the illuminator control icon in the following feasible implementations:
In a feasible implementation, the shooting interface includes the illuminator control icon.

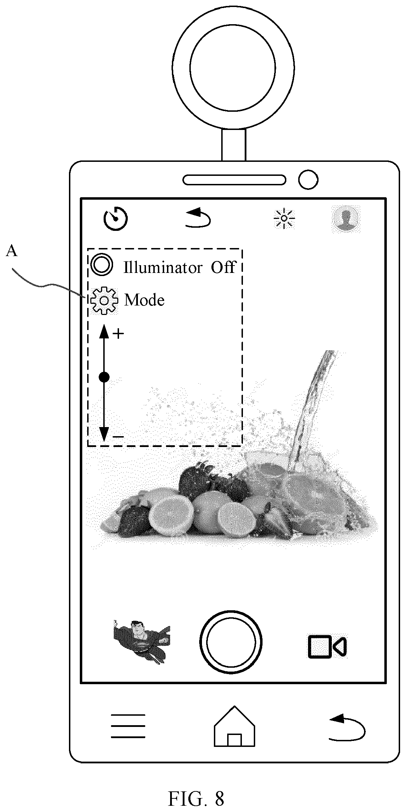

With reference to FIG. 8, the following describes this feasible implementation.

FIG. 8 is a schematic diagram of still another terminal interface according to an embodiment of this application. As shown in FIG. 8, the shooting interface includes an illuminator control icon (an icon shown in an area A), and the illuminator control icon is a part of elements in the shooting interface. A position of the illuminator control icon in the shooting interface may be fixed. The illuminator control icon may be located above an image window (a window for shooting an image), or the illuminator control icon may be located outside the image window.

In this feasible implementation, the illuminator control icon is located at a fixed position in the terminal interface, so that the user can learn of the illuminator control icon, and difficulty in using the illuminator fitting is reduced.

In another feasible implementation, the illuminator control icon is suspended in the shooting interface.

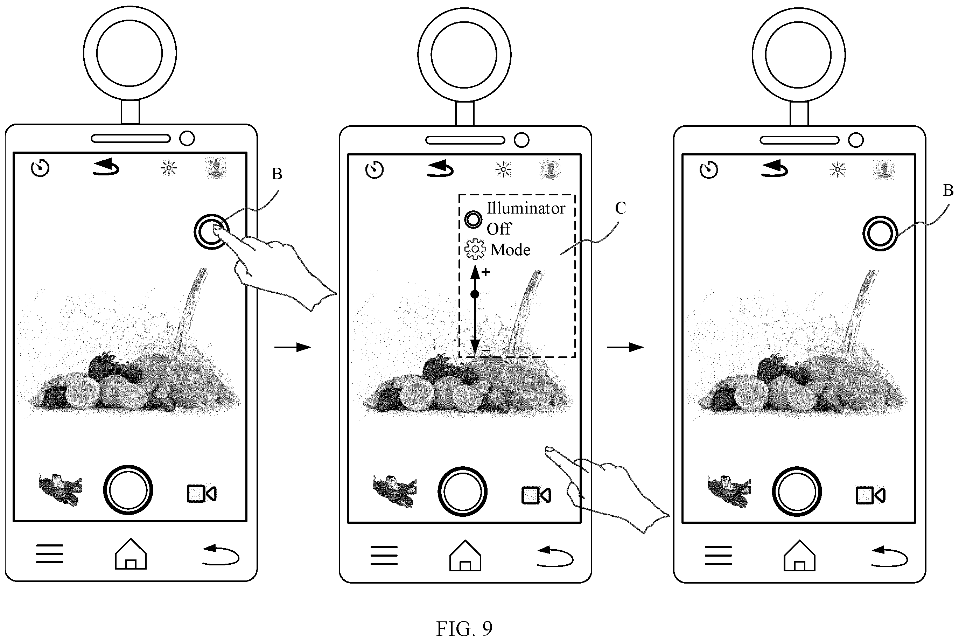

With reference to FIG. 9, the following describes this feasible implementation.

FIG. 9 is a schematic diagram of yet another terminal interface according to an embodiment of this application. As shown in FIG. 9, an interface 901, an interface 902, and an interface 903 are included.

Refer to the interface 901. An illuminator prompt icon B is displayed in a floating form in the shooting interface. The user may perform a preset operation (for example, a tap operation or a double-tap operation) on the illuminator prompt icon B, so that the electronic device displays an illuminator control icon. The illuminator prompt icon B may be displayed at different positions in the shooting interface. For example, the user may perform a drag operation on the illuminator prompt icon B, so that the illuminator prompt icon B is located at a different position in the shooting interface. When the user needs to control the illuminator, the user may perform the preset operation on the illuminator prompt icon B, so that the electronic device displays the illuminator control icon.

Refer to the interface 902. The electronic device displays the illuminator control icon (an icon shown in an area C), and the user may perform a corresponding operation on the illuminator control icon to control the illuminator. When the user does not need to control the illuminator, the user may further perform a tap operation in an area in the shooting interface other than the area C, so that the electronic device does not display the illuminator control icon, but displays the illuminator prompt icon B.

Refer to the interface 903. After the user performs the tap operation in the area in the shooting interface other than the area C, the electronic device no longer displays the illuminator control icon, but displays the illuminator prompt icon B.

In this feasible implementation, the electronic device can control the illuminator without changing the image-shooting application. Because the illuminator prompt icon B occupies a relatively small area in the shooting screen, poor shooting experience is not caused.

In still another feasible implementation, the shooting interface and the illuminator control icon are located in different areas in a display interface of the electronic device.

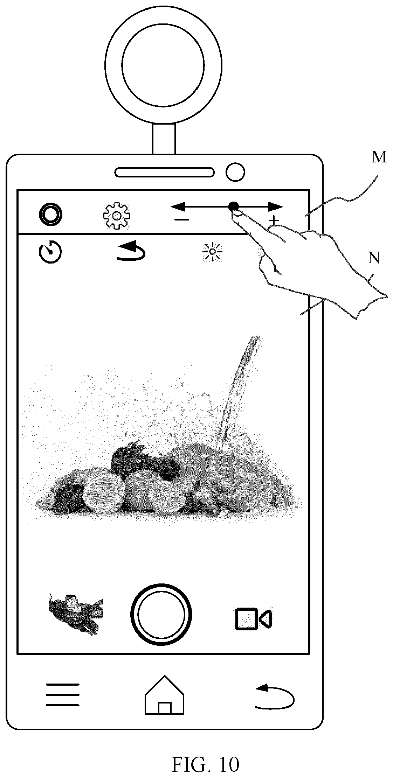

With reference to FIG. 10, the following describes this feasible implementation.

FIG. 10 is a schematic diagram of still yet another terminal interface according to an embodiment of this application. As shown in FIG. 10, the terminal interface includes an illuminator control icon area M and a shooting area N. The illuminator control icon area M includes an illuminator control icon.

In this feasible implementation, the illuminator control icon is displayed in the illuminator control icon area, so that the user can conveniently determine a position of the illuminator control icon in the display interface.

S505: The electronic device controls to turn on the illuminator in the illuminator fitting.

Optionally, the electronic device may control to turn on the illuminator in the illuminator fitting in the following feasible implementations.

In a feasible implementation, when the electronic device determines that the status of the illuminator fitting is the valid state, the electronic device turns on the illuminator in the illuminator fitting based on the valid state. To be specific, when determining that the status of the illuminator fitting is the valid state, the electronic device automatically turns on the illuminator in the illuminator fitting.

Optionally, a status corresponding to the illuminator status icon is an on state by default. To be specific, the status corresponding to the illuminator status icon in the illuminator control icon displayed on the electronic device is the on state by default.

In this feasible implementation, after starting the image-shooting apparatus, the electronic device quickly turns on the illuminator in the illuminator fitting, so that a delay in turning on the illuminator is relatively small.

In another feasible implementation, a status corresponding to the illuminator status icon displayed on the electronic device is an off state by default. In this case, the user may perform an operation on the illuminator status icon, to switch the status corresponding to the illuminator status icon to an on state. After the electronic device detects that the status corresponding to the illuminator status icon is switched to the on state, the electronic device controls to turn on the illuminator.

In this feasible implementation, when the user needs to turn on the illuminator, the user may perform the operation on the illuminator status icon, so that the electronic device controls to turn on the illuminator. Therefore, flexibility for controlling the illuminator is relatively high.

In still another feasible implementation, the electronic device obtains ambient brightness and/or brightness of an image collected by the image-shooting apparatus of the electronic device, and the electronic device controls to turn on the illuminator when the ambient brightness is less than a first threshold and/or the brightness of the image collected by the image-shooting apparatus of the electronic device is less than a second threshold.

In this feasible implementation, when the ambient brightness is less than the first threshold and/or the brightness of the image collected by the image-shooting apparatus is less than the second threshold, it indicates that the image-shooting apparatus has a light compensation requirement, and then the electronic device turns on the illuminator. Therefore, flexibility for controlling the illuminator is relatively high.

Optionally, the electronic device may send a turn-on instruction (one of control instructions) to a communications component in the illuminator fitting, the communications component in the illuminator fitting may send the turn-on instruction to a control component in the illuminator fitting, and the control component may control to turn on the illuminator according to the turn-on instruction. For example, the control component may control, according to the turn-on instruction, the illuminator to be connected to a power supply component, so that the power supply component successfully supplies power to the illuminator. Then, the control component may control to turn on the illuminator. Optionally, the turn-on instruction may further include an illuminator parameter. Correspondingly, the control component may control to turn on the illuminator based on the illuminator parameter, so that the illuminator emits light based on the illuminator parameter. For example, when the illuminator parameter includes brightness, the control component may control brightness of the illuminator to be the brightness in the illuminator parameter. When the illuminator parameter includes a mode, the control component may control a light emitting mode of the illuminator to be the mode in the illuminator parameter.

For example, when an NFC component (the communications component is the NFC component) is disposed in each of the electronic device and the illuminator fitting, the electronic device may send, by using the NFC component, the turn-on instruction to the NFC component in the illuminator fitting. When a wireless charging coil (the communications component is the wireless charging coil) is disposed in each of the electronic device and the illuminator fitting, the electronic device may send, by using the wireless charging coil in the illuminator fitting, the turn-on instruction to the wireless charging coil in the illuminator fitting.

Optionally, if the power supply component in the illuminator fitting is a wireless charging component, when the electronic device determines that the status of the illuminator fitting is the valid state, the electronic device starts to charge the wireless charging component. For example, the electronic device may set a wireless charging component in the electronic device to be in a reverse charging mode, so that the wireless charging component in the electronic device can perform reverse charging on the wireless charging component in the illuminator fitting.

Optionally, before the electronic device controls to turn on the illuminator in the illuminator fitting, the electronic device may first obtain the illuminator parameter of the illuminator. Correspondingly, when turning on the illuminator, the electronic device may control to turn on the illuminator based on the illuminator parameter of the illuminator. The illuminator parameter of the illuminator may include the mode of the illuminator, the brightness of the illuminator, and the like.

Optionally, the electronic device may determine a preset parameter as the illuminator parameter of the illuminator. For example, the preset parameter may be a preset parameter applicable to a plurality of shooting scenarios. In this way, the electronic device can quickly obtain the illuminator parameter, and the illuminator parameter is appropriate for turning on the illuminator. In other words, the illuminator can perform appropriate light compensation for a shooting scenario of the image-shooting apparatus on the electronic device based on the illuminator parameter, to improve a shooting effect.

Optionally, the electronic device may determine the illuminator parameter of the illuminator based on the ambient brightness and/or the image collected by the image-shooting apparatus of the electronic device. The illuminator parameter determined by the electronic device is related to a current shooting environment, so that accuracy of the determined illuminator parameter is relatively high.

It should be noted that S504 and S505 may be performed sequentially, or may be performed in parallel. A sequence of performing S504 and S505 is not limited in this embodiment of this application.

S506: The electronic device receives a control instruction entered by the user.

The control instruction is used to control the illuminator.

Optionally, the user may perform an illuminator control operation on the illuminator control icon, and the electronic device generates the control instruction based on the illuminator control operation. The control instruction may be used to control the mode, the brightness, and an on/off status (an on state or an off state of the illuminator) of the illuminator.

For example, when the user needs to adjust the brightness of the illuminator, the user may perform an illuminator brightness adjustment operation on the illuminator brightness icon. For example, refer to FIG. 10. When the user needs to adjust the brightness of the illuminator, the user may perform a sliding operation on a slider control of the illuminator brightness icon, to perform the illuminator brightness adjustment operation.

S507: The electronic device controls the illuminator in the illuminator fitting according to the control instruction.

Optionally, the electronic device may send the control instruction to the communications component in the illuminator fitting, and the communications component sends the control instruction to the control component in the illuminator fitting, so that the control component controls the illuminator according to the control instruction. Optionally, the control instruction may further include the on/off status (an on state or an off state). If the on/off status included in the control instruction is different from a current status of the illuminator, the control component controls the status of the illuminator based on the on/off status in the control instruction. Optionally, the control instruction may further include the illuminator parameter. Correspondingly, the control component may control to turn on the illuminator based on the illuminator parameter, so that the illuminator emits light based on the illuminator parameter. For example, when the illuminator parameter includes the brightness, the control component may control the brightness of the illuminator to be the brightness in the illuminator parameter. When the illuminator parameter includes the mode, the control component may control the light emitting mode of the illuminator to be the mode in the illuminator parameter.

For example, when the NFC component (the communications component is the NFC component) is disposed in each of the electronic device and the illuminator fitting, the electronic device may send, by using the NFC component, the control instruction to the NFC component in the illuminator fitting. When the wireless charging coil (the communications component is the wireless charging coil) is disposed in each of the electronic device and the illuminator fitting, the electronic device may send, by using the wireless charging coil in the illuminator fitting, the control instruction to the wireless charging coil in the illuminator fitting.

In the embodiment shown in FIG. 5, after the electronic device obtains the image-shooting start instruction, the electronic device may start the image-shooting application and the image-shooting apparatus, and the electronic device may further automatically detect whether there is the available illuminator fitting. After the electronic device determines that there is the available illuminator fitting, the electronic device may control to turn on the illuminator in the illuminator fitting, that is, the electronic device may control the illuminator in the illuminator fitting. This improves flexibility for controlling the illuminator. The electronic device may display the shooting interface and the illuminator control icon. The user may control the illuminator by using the illuminator control icon displayed on the electronic device. This further improves flexibility for controlling the illuminator.

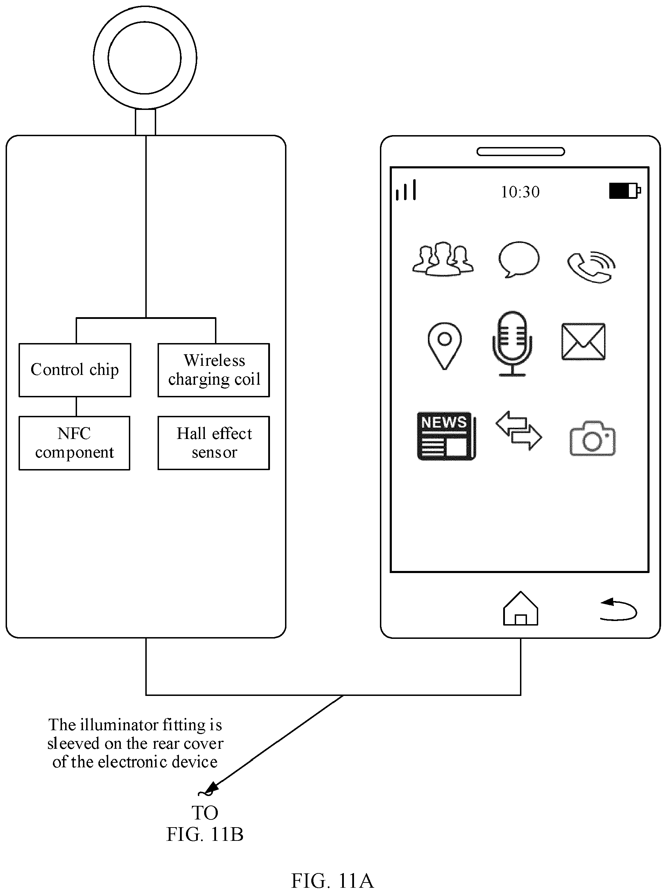

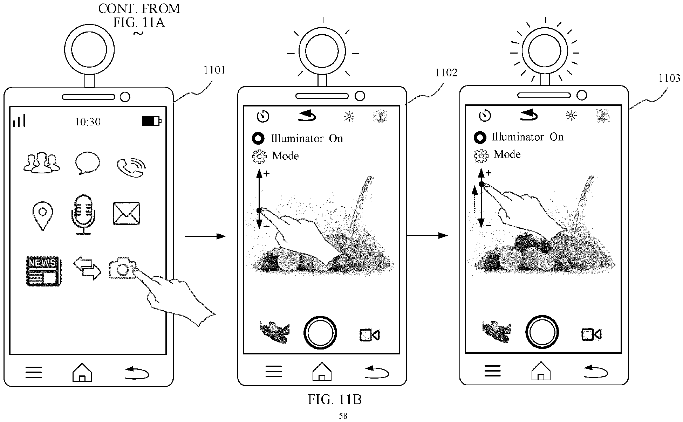

Based on any one of the foregoing embodiments, the following describes, in detail with reference to FIG. 11A and FIG. 11B, an illuminator control method by using a specific example.

FIG. 11A and FIG. 11B are schematic diagrams of an illuminator control process according to an embodiment of this application. As shown in FIG. 11A and FIG. 11B, in an illuminator fitting, a control component is a control chip, a power supply component is a wireless charging coil, a communications component is an NFC component, and a discovery component is a Hall effect sensor. An electronic device is a mobile phone.

Refer to FIG. 11A and FIG. 11B. Before shooting based on light compensation is performed, the illuminator fitting may first be installed on a rear cover of the mobile phone. A Hall effect sensor in the mobile phone detects a magnetic field signal. After the Hall effect sensor in the mobile phone detects the magnetic field signal, the mobile phone determines that the illuminator fitting is discovered. After the mobile phone determines that the illuminator fitting is discovered, the mobile phone may read NFC information in the illuminator fitting by using an NFC component, where the NFC information indicates information about the illuminator fitting. The mobile phone may determine, based on the read NFC information, whether the discovered illuminator fitting matches the mobile phone.

After the mobile phone determines that the discovered illuminator fitting matches the mobile phone, the mobile phone determines that there is an available illuminator fitting, and writes an illuminator fitting flag bit into a memory. The mobile phone further sets a wireless charging coil in the mobile phone to be in a reverse charging mode. The wireless charging coil in the mobile phone establishes a connection to the wireless charging coil in the illuminator fitting, and the mobile phone reversely charges the wireless charging coil in the illuminator fitting by using the wireless charging coil. A voltage of the wireless charging coil in the illuminator fitting is gradually increased in a process of reversely charging the wireless charging coil in the illuminator fitting.

Refer to an interface 1101. An image-shooting application is installed on the mobile phone, and an icon of the image-shooting application is displayed on a displayed screen of the mobile phone. When a user needs to perform image-shooting, the user may perform a tap operation on the icon of the image-shooting application, and the mobile phone generates an image-shooting start instruction based on the tap operation performed by the user on the icon of the image-shooting application.

Refer to an interface 1102. The mobile phone starts the image-shooting application and an image-shooting apparatus according to the image-shooting start instruction. If the mobile phone determines that there is an illuminator fitting flag bit in a memory, the mobile phone sends a turn-on instruction to the NFC component in the illuminator fitting. The NFC component sends the turn-on instruction to the control chip, and the control chip turns on an illuminator in the illuminator fitting according to the turn-on instruction. After the mobile phone starts the image-shooting application, the mobile phone displays a shooting interface and illuminator control icons (including an illuminator status icon, an illuminator mode icon, and an illuminator brightness icon). When the user needs to adjust brightness of the illuminator, the user may perform a sliding operation on a slider control of the illuminator brightness icon.

Refer to an interface 1103. The mobile phone generates an illuminator brightness adjustment instruction based on the sliding operation performed by the user on the slider control of the illuminator brightness icon, and sends the illuminator brightness adjustment instruction to the NFC component in the illuminator fitting. The NFC component sends the illuminator brightness adjustment instruction to the control chip, and the control chip adjusts the brightness of the illuminator according to the illuminator brightness adjustment instruction.

In the embodiment shown in FIG. 11A and FIG. 11B, after the mobile phone obtains the image-shooting start instruction, the mobile phone may start the image-shooting apparatus, and the mobile phone may further automatically detect whether there is the available illuminator fitting. After the mobile phone determines that there is the available illuminator fitting, the mobile phone may control to turn on the illuminator in the illuminator fitting, that is, the mobile phone may control the illuminator in the illuminator fitting. This improves flexibility for controlling the illuminator. The mobile phone may display the shooting interface and the illuminator control icon. The user may control the illuminator by using the illuminator control icon displayed on the mobile phone. This further improves flexibility for controlling the illuminator.

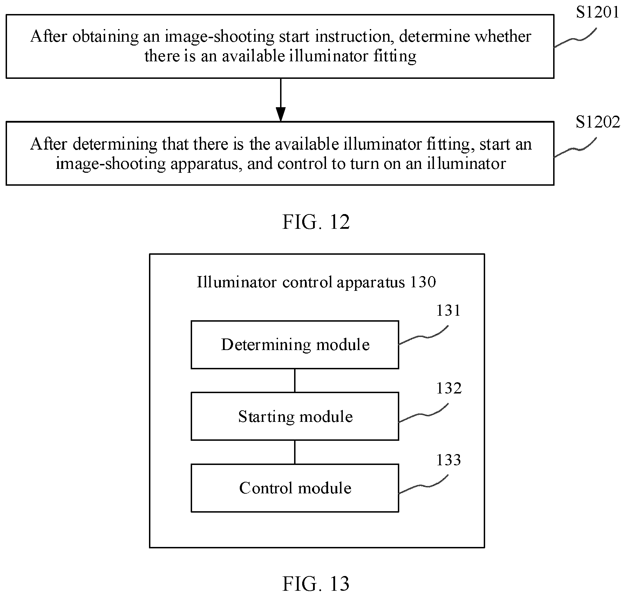

FIG. 12 is a schematic flowchart of still another illuminator control method according to an embodiment of this application. Refer to FIG. 12. The method may include the following steps.

S1201: After obtaining an image-shooting start instruction, determine whether there is an available illuminator fitting.

The illuminator fitting includes an illuminator.

Optionally, whether there is the available illuminator fitting may be determined in a manner shown in S503. Details are not described herein again.

S1202: After determining that there is the available illuminator fitting, start an image-shooting apparatus, and control to turn on the illuminator.

It should be noted that, for a process of performing S1202, reference may be made to a process of performing S504 and S505. Details are not described herein again.

In the embodiment shown in FIG. 12, after an electronic device obtains the image-shooting start instruction, the electronic device may start the image-shooting apparatus, and the electronic device may further automatically detect whether there is the available illuminator fitting. After the electronic device determines that there is the available illuminator fitting, the electronic device may control to turn on the illuminator in the illuminator fitting, that is, the electronic device may control the illuminator in the illuminator fitting. This improves flexibility for controlling the illuminator.

FIG. 13 is a schematic diagram of a structure of an illuminator control apparatus according to an embodiment of this application. The illuminator control apparatus 130 may be applied to an electronic device, and the electronic device includes an image-shooting apparatus. Refer to FIG. 13. The illuminator control apparatus 130 includes a determining module 131, a starting module 132, and a control module 133.

The determining module 131 is configured to: after obtaining an image-shooting start instruction, determine whether there is an available illuminator fitting, where the illuminator fitting includes an illuminator.

The starting module 132 is configured to start the image-shooting apparatus after the determining module determines that there is the available illuminator fitting.

The control module 133 is configured to control to turn on the illuminator.

Optionally, a structure of the electronic device in which the illuminator control apparatus 130 in this embodiment of this application is located may be shown in FIG. 2, and the illuminator control apparatus 130 may be a part or all of the processor 201 in the electronic device shown in FIG. 2. The illuminator fitting may be shown in FIG. 1A to FIG.1C.

The illuminator control apparatus provided in this embodiment of this application can perform the technical solutions shown in the foregoing method embodiments. Implementation principles and advantageous effects of the illuminator control apparatus are similar to those in the method embodiments. Details are not described herein again.

In a possible implementation, a wireless charging component is disposed in each of the electronic device and the illuminator fitting.

The control module 133 is further configured to: after the determining module determines that there is the available illuminator fitting, control the wireless charging component in the electronic device to charge the wireless charging component in the illuminator fitting, where the wireless charging component in the illuminator fitting is configured to supply power to the illuminator.

In a possible implementation, the control module 133 is specifically configured to:
obtain an illuminator parameter of the illuminator, where the illuminator parameter includes at least one of the following: a mode of the illuminator and brightness of the illuminator; and
control to turn on the illuminator based on the illuminator parameter.

In a possible implementation, the control module 133 is specifically configured to:
obtain ambient brightness and/or an image shot by the image-shooting apparatus; and
determine the illuminator parameter based on the ambient brightness and/or the image shot by the image-shooting apparatus.

In a possible implementation, the control module 133 is specifically configured to:
obtain the ambient brightness and/or brightness of the image shot by the image-shooting apparatus; and
when determining that the ambient brightness is less than a first threshold and/or the brightness of the image shot by the image-shooting apparatus is less than a second threshold, control to turn on the illuminator.

In a possible implementation, the determining module 131 is specifically configured to:
determine whether there is an illuminator fitting flag bit in preset storage space; and
if there is the illuminator fitting flag bit in the preset storage space in a memory, determine that there is the available illuminator fitting; or
if there is no illuminator fitting flag bit in the preset storage space, determine that there is no available illuminator fitting.

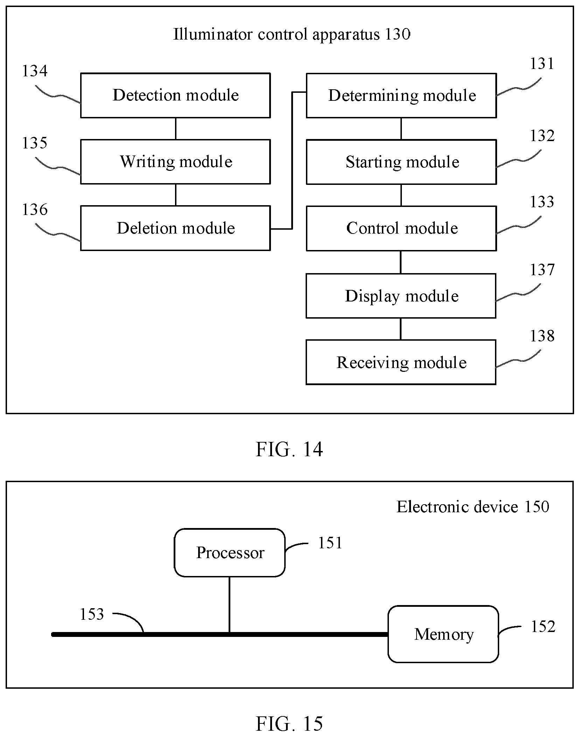

FIG. 14 is a schematic diagram of a structure of another illuminator control apparatus according to an embodiment of this application. Based on the embodiment shown in FIG. 13, as shown in FIG. 14, the illuminator control apparatus 130 further includes a detection module 134, a writing module 135, and a deletion module 136.

The detection module 134 is configured to: before the image-shooting start instruction is obtained, detect an illuminator fitting.

The writing module 135 is configured to: when the detection module detects the available illuminator fitting, write the illuminator fitting flag bit into the preset storage space.

The deletion module 136 is configured to: when the detection module detects no available illuminator fitting, determine whether the preset storage space includes the illuminator fitting flag bit; and delete the illuminator fitting flag bit if the preset storage space includes the illuminator fitting flag bit.

In a possible implementation, a near field communication NFC component and a magnetic field sensor are disposed in each of the electronic device and the illuminator fitting, and the detection module 134 is specifically configured to:
detect a magnetic field signal by using the magnetic field sensor in the electronic device;
after the magnetic field signal is detected by using the magnetic field sensor in the electronic device, read, by using the NFC component in the electronic device, NFC information sent by the NFC component in the illuminator fitting, where the NFC information is used to indicate information about the illuminator fitting; and
determine whether the NFC information indicates the illuminator fitting; and if the NFC information indicates the illuminator fitting, determine that the available illuminator fitting is detected; or if the NFC information does not indicate the illuminator fitting, determine that no available illuminator fitting is detected.

In a possible implementation, the apparatus further includes a display module 137 and a receiving module 138.

The display module 137 is configured to: after the determining module determines that there is the available illuminator fitting, display an illuminator control icon.

The receiving module 138 is configured to receive a control instruction entered by a user by using the illuminator control icon.

The control module 133 is further configured to control the illuminator according to the control instruction.

The illuminator control apparatus provided in this embodiment of this application can perform the technical solutions shown in the foregoing method embodiments. Implementation principles and advantageous effects of the illuminator control apparatus are similar to those in the method embodiments. Details are not described herein again.

FIG. 15 is a schematic diagram of a structure of another electronic device according to an embodiment of this application. As shown in FIG. 15, the electronic device 150 may include a processor 151, a memory 152, and a communications bus 153. The processor 151 communicates with the memory 152 through the communications bus 153. The processor 151 executes program instructions in the memory 152, and performs the following steps according to the program instructions:
after obtaining an image-shooting start instruction, determining whether there is an available illuminator fitting, where the illuminator fitting includes an illuminator; and
after determining that there is the available illuminator fitting, starting an image-shooting apparatus, and controlling to turn on the illuminator.

Optionally, the illuminator fitting may be shown in FIG. 1A to FIG. 1C.

The electronic device provided in this embodiment of this application can perform the technical solutions shown in the foregoing method embodiments. Implementation principles and advantageous effects of the electronic device are similar to those in the method embodiments. Details are not described herein again.

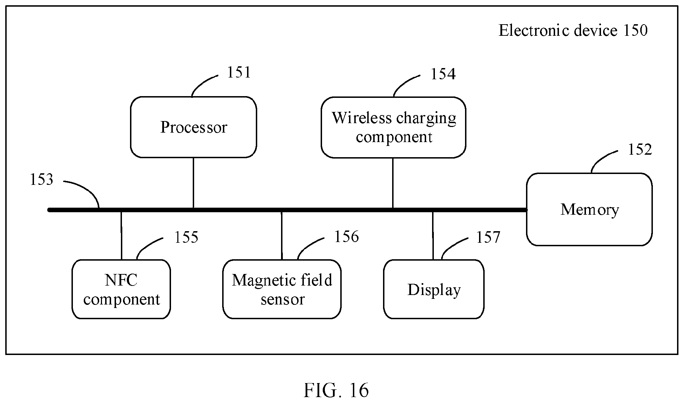

FIG. 16 is a schematic diagram of a structure of still another electronic device according to an embodiment of this application. Based on the embodiment shown in FIG. 15, the electronic device 150 further includes a wireless charging component 154. A wireless charging component is also disposed in the illuminator fitting. The processor 151 is further configured to:
after determining that there is the available illuminator fitting, control the wireless charging component 154 in the electronic device to charge the wireless charging component in the illuminator fitting, where the wireless charging component in the illuminator fitting is configured to supply power to the illuminator.

In a possible implementation, the processor 151 is specifically configured to:
obtain an illuminator parameter of the illuminator, where the illuminator parameter includes at least one of the following: a mode of the illuminator and brightness of the illuminator; and
control to turn on the illuminator based on the illuminator parameter.

In a possible implementation, the processor 151 is specifically configured to:
obtain ambient brightness and/or an image shot by the image-shooting apparatus; and
determine the illuminator parameter based on the ambient brightness and/or the image shot by the image-shooting apparatus.

In a possible implementation, the processor 151 is specifically configured to:
obtain the ambient brightness and/or brightness of the image shot by the image-shooting apparatus; and
when determining that the ambient brightness is less than a first threshold and/or the brightness of the image shot by the image-shooting apparatus is less than a second threshold, control to turn on the illuminator.

In a possible implementation, the processor 151 is specifically configured to:
determine whether there is an illuminator fitting flag bit in preset storage space in the memory; and
if there is the illuminator fitting flag bit in the preset storage space in the memory, determine that there is the available illuminator fitting; or
if there is no illuminator fitting flag bit in the preset storage space in the memory, determine that there is no available illuminator fitting.

In a possible implementation, before the processor obtains the image-shooting start instruction, the processor 151 is further configured to:
detect an illuminator fitting; and
if the available illuminator fitting is detected, write the illuminator fitting flag bit into the preset storage space; or
if no available illuminator fitting is detected, determine whether the preset storage space includes the illuminator fitting flag bit, and delete the illuminator fitting flag bit if the preset storage space includes the illuminator fitting flag bit.

In a possible implementation, the electronic device 150 further includes a near field communication NFC component 155 and a magnetic field sensor 156, and the illuminator fitting also includes an NFC component and a magnetic field sensor.

The magnetic field sensor 156 in the electronic device is configured to detect a magnetic field signal.

The processor 151 is further configured to: after the magnetic field sensor 156 in the electronic device detects the magnetic field signal, control the NFC component 155 in the electronic device to read NFC information sent by the NFC component in the illuminator fitting, where the NFC information is used to indicate information about the illuminator fitting.

The processor 151 is further configured to: determine whether the NFC information indicates the illuminator fitting; and if the NFC information indicates the illuminator fitting, determine that the available illuminator fitting is detected; or if the NFC information does not indicate the illuminator fitting, determine that no available illuminator fitting is detected.

In a possible implementation, the electronic device 150 further includes a display 157.

The display 157 is configured to: after the processor 151 determines that there is the available illuminator fitting, display an illuminator control icon.

The processor 151 is further configured to: receive a control instruction entered by a user by using the illuminator control icon, and control the illuminator according to the control instruction.

The electronic device 150 provided in this embodiment of this application can perform the technical solutions shown in the foregoing method embodiments. Implementation principles and advantageous effects of the electronic device are similar to those in the method embodiments. Details are not described herein again.

Optionally, the processor 151 may be a central processing unit (central processing unit, CPU), or may be another general-purpose processor, a DSP, an application-specific integrated circuit (application-specific integrated circuit, ASIC), or the like. The general-purpose processor may be a microprocessor, or the processor may be any conventional processor or the like. The steps of the method embodiments disclosed with reference to this application may be directly implemented by a hardware processor, or may be implemented by a combination of hardware and a software module in a processor.

It should be noted that the electronic device shown in FIG. 15 or FIG. 16 and the electronic device shown in FIG. 2 may be the same electronic device, and FIG. 15 and FIG. 16 and FIG. 2 merely show the structure of the electronic device from different perspectives. For example, the electronic device in this application may be the electronic device shown in any embodiment in FIG. 2, FIG. 15, or FIG. 16, or may be a combination of the electronic devices shown in the embodiments of FIG. 2, FIG. 15, and FIG. 16. When the electronic device 150 shown in FIG. 15 or FIG. 16 and the electronic device 20 shown in FIG. 2 include a same component, the same component may have a same function. For example, the processor 151 in the electronic device 150 shown in FIG. 15 or FIG. 16 has a same function as the processor 201 in the electronic device 20 shown in FIG. 2, and the memory 152 in the electronic device 150 shown in FIG. 15 or FIG. 16 has a same function as the memory 206 in the electronic device 20 shown in FIG. 2.

An embodiment of this application provides a storage medium. The storage medium is configured to store computer programs. The computer programs are used to implement the illuminator control method described in the foregoing embodiments.

An embodiment of this application provides a chip. The chip is configured to support an electronic device in implementing the functions shown in the embodiments of this application (For example, obtaining the image-shooting start instruction, determining whether there is the available illuminator fitting, starting the image-shooting apparatus, and controlling to turn on the illuminator). The chip is specifically used in a chip system. The chip system may include the chip, or may include the chip and another discrete component. When the foregoing methods are implemented by using a chip in a terminal device, the chip includes a processing unit. Further, the chip may further include a communications unit. The processing unit may be, for example, a processor. When the chip includes the communications unit, the communications unit may be, for example, an input/output interface, a pin, or a circuit. The processing unit executes all or some actions performed by each processing module (for example, the processing module in FIG. 15 or FIG. 16) in the embodiments of this application. The communications unit may perform a corresponding receiving or sending action. In another specific embodiment, a processing module of the terminal device in this application may be the processing unit of the chip, and a receiving module or a sending module of the terminal device is the communications unit of the chip.

All or some of the steps in the method embodiments may be implemented by hardware related to the program instructions. The foregoing programs may be stored in a readable memory. When the programs are executed, the steps included in the method embodiments are performed. The memory (storage medium) includes: a read-only memory (read-only memory, ROM), a RAM, a flash memory, a hard disk, a solid-state drive, a magnetic tape (magnetic tape), a floppy disk (floppy disk), an optical disc (optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. An illuminator control method, applied to an electronic device, wherein the electronic device comprises an image-shooting apparatus, and the method comprises:
after obtaining an image-shooting start instruction, determining (S1201) whether there is an available illuminator fitting, wherein the illuminator fitting comprises an illuminator; and
after determining (S1201) that there is the available illuminator fitting, starting (S1202) the image-shooting apparatus, and controlling to turn on the illuminator,
**characterized in that**
a wireless charging component is disposed in each of the electronic device and the illuminator fitting; and after the determining that there is the available illuminator fitting, the method further comprises:
controlling (S505) the wireless charging component in the electronic device to charge the wireless charging component in the illuminator fitting, wherein the wireless charging component in the illuminator fitting is configured to supply power to the illuminator.

2. The method according to claim 1, wherein the controlling (S505) to turn on the illuminator comprises:
obtaining an illuminator parameter of the illuminator, wherein the illuminator parameter comprises at least one of the following: a mode of the illuminator and brightness of the illuminator; and
controlling to turn on the illuminator based on the illuminator parameter.

3. The method according to any one of claims 1 or 2, wherein the controlling (S505) to turn on the illuminator comprises:
obtaining the ambient brightness and/or brightness of the image shot by the image-shooting apparatus; and
when determining that the ambient brightness is less than a first threshold and/or the brightness of the image shot by the image-shooting apparatus is less than a second threshold, controlling to turn on the illuminator.

4. The method according to any one of claims 1 to 3, wherein after the determining that there is the available illuminator fitting, the method further comprises:
displaying an illuminator control icon;
receiving a control instruction entered by a user by using the illuminator control icon; and
controlling the illuminator according to the control instruction.

5. An illuminator fitting (101), comprising: an illuminator, a fixing component, a communications component, a control component, and a power supply component, wherein the illuminator, the communications component, the control component, and the power supply component are disposed on the fixing component, wherein
the fixing component is configured to be fastened to an electronic device, and the electronic device comprises an image-shooting apparatus;
the communications component is configured to: receive a control instruction sent by the electronic device, and send the control instruction to the control component; and
the control component is configured to control the illuminator according to the control instruction, the power supply component is configured to supply power to the illuminator, and the illuminator is configured to perform light compensation for a shooting environment of the image-shooting apparatus,
**characterized in that** the power supply component is a first wireless charging component, wherein
the first wireless charging component is configured to receive charging from a second wireless charging component comprised in the electronic device.

6. The illuminator fitting (101) according to claim 5, wherein the control instruction comprises an illuminator parameter, and the illuminator parameter comprises at least one of the following: a mode of the illuminator and brightness of the illuminator; and
the control component is further configured to control to turn on the illuminator based on the illuminator parameter in the received control instruction sent by the electronic device.

7. The illuminator fitting (101) according to any one of claims 5 or 6, wherein the illuminator fitting further comprises a discovery component, and the discovery component is disposed on the fixing component, wherein
the discovery component is configured to enable the electronic device to discover the illuminator fitting.

8. The illuminator fitting (101) according to claim 7, wherein the discovery component comprises a magnetic field sensor and/or a near field communication NFC component, wherein
the magnetic field sensor is configured to transmit a magnetic field signal; and
the NFC component is configured to send NFC information to an NFC component in the electronic device, wherein the NFC information is used to indicate information about the illuminator fitting.

9. An electronic device (150), comprising a memory (152) and a processor (151), wherein the processor (151) executes program instructions in the memory (152), to enable the electronic device (150) to perform the following steps:
after obtaining an image-shooting start instruction, determining whether there is an available illuminator fitting, wherein the illuminator fitting comprises an illuminator; and
after determining that there is the available illuminator fitting, starting an image-shooting apparatus, and controlling to turn on the illuminator,
**characterized in that** the electronic device (150) further comprises a first wireless charging component;
and the processor is further configured to:
after determining that there is the available illuminator fitting, control the first wireless charging component in the electronic device to charge a second wireless charging component in the illuminator fitting, wherein the wireless charging component in the illuminator fitting is configured to supply power to the illuminator.

10. The electronic device (150) according to claim 9, wherein the processor (151) is specifically configured to:
obtain an illuminator parameter of the illuminator, wherein the illuminator parameter comprises at least one of the following: a mode of the illuminator and brightness of the illuminator; and
control to turn on the illuminator based on the illuminator parameter.

11. The electronic device (15) according to any one of claims 9 or 10, wherein the processor is specifically configured to:
obtain the ambient brightness and/or brightness of the image shot by the image-shooting apparatus; and
when determining that the ambient brightness is less than a first threshold and/or the brightness of the image shot by the image-shooting apparatus is less than a second threshold, control to turn on the illuminator.

12. The electronic device (150) according to any one of claims 9 to 11, wherein the electronic device further comprises a display, where
the display is configured to: after the processor determines that there is the available illuminator fitting, display an illuminator control icon; and
the processor is further configured to: receive a control instruction entered by a user by using the illuminator control icon, and control the illuminator according to the control instruction.

## Patentansprüche

1. Beleuchtungselementsteuerverfahren, angewendet auf eine elektronische Vorrichtung, wobei die elektronische Vorrichtung eine Bildaufnahmeeinrichtung umfasst und das Verfahren Folgendes umfasst:
nach Erhalt einer Bildaufnahmestartanweisung, Bestimmen (S1201), ob ein verfügbarer Beleuchtungselementaufsatz vorhanden ist, wobei der Beleuchtungselementaufsatz ein Beleuchtungselement umfasst, und
nach Bestimmen (S1201), dass der verfügbare Beleuchtungselementaufsatz vorhanden ist, Starten (S1202) der Bildaufnahmeeinrichtung und Steuern zum Einschalten des Beleuchtungselements,
**dadurch gekennzeichnet, dass**
eine Drahtlosladekomponente in sowohl der elektronischen Vorrichtung als auch dem Beleuchtungselementaufsatz angeordnet ist, und das Verfahren nach dem Bestimmen, dass der verfügbare Beleuchtungselementaufsatz vorhanden ist, ferner Folgendes umfasst:
Steuern (S505) der Drahtlosladekomponente in der elektronischen Vorrichtung zum Laden der Drahtlosladekomponente in dem Beleuchtungselementaufsatz, wobei die Drahtlosladekomponente in dem Beleuchtungselementaufsatz zum Versorgen des Beleuchtungselements mit Strom ausgelegt ist.

2. Verfahren nach Anspruch 1, wobei das Steuern (S505) zum Einschalten des Beleuchtungselements Folgendes umfasst:
Erhalten eines Beleuchtungselementparameters des Beleuchtungselements, wobei der Beleuchtungselementparameter einen Modus des Beleuchtungselements und/oder eine Helligkeit des Beleuchtungselements umfasst; und
Steuern zum Einschalten des Beleuchtungselements basierend auf dem Beleuchtungselementparameter.

3. Verfahren nach einem der Ansprüche 1 oder 2, wobei das Steuern (S505) zum Einschalten des Beleuchtungselements Folgendes umfasst:
Erhalten der Umgebungshelligkeit und/oder Helligkeit des durch die Bildaufnahmeeinrichtung aufgenommenen Bilds; und
wenn bestimmt wird, dass die Umgebungshelligkeit geringer als eine erste Schwelle ist und/oder die Helligkeit des durch die Bildaufnahmeeinrichtung aufgenommenen Bilds geringer als eine zweite Schwelle ist, Steuern zum Einschalten des Beleuchtungselements.

4. Verfahren nach einem der Ansprüche 1 bis 3, wobei das Verfahren nach dem Bestimmen, dass der verfügbare Beleuchtungselementaufsatz vorhanden ist, ferner Folgendes umfasst:
Anzeigen eines Beleuchtungselementsteuersymbols;
Empfangen einer durch einen Benutzer unter Verwendung des Beleuchtungselementsteuersymbols eingegebenen Steueranweisung, und
Steuern des Beleuchtungselements gemäß der Steueranweisung.

5. Beleuchtungselementaufsatz (101), der Folgendes umfasst: ein Beleuchtungselement, eine Befestigungskomponente, eine Kommunikationskomponente, eine Steuerkomponente und eine Stromversorgungskomponente, wobei das Beleuchtungselement, die Kommunikationskomponente, die Steuerkomponente und die Stromversorgungskomponente an der Befestigungskomponente angeordnet sind, wobei
die Befestigungskomponente dazu ausgelegt ist, an einer elektronischen Vorrichtung befestigt zu werden, und die elektronische Vorrichtung eine Bildaufnahmeeinrichtung umfasst;
die Kommunikationskomponente zu Folgendem ausgelegt ist: Empfangen einer durch die elektronische Vorrichtung gesendeten Steueranweisung und Senden der Steueranweisung an die Steuerkomponente; und
die Steuerkomponente ausgelegt ist zum Steuern des Beleuchtungselements gemäß der Steueranweisung, die Stromversorgungskomponente ausgelegt ist zum Versorgen des Beleuchtungselements mit Strom und das Beleuchtungselement ausgelegt ist zum Durchführen einer Lichtkompensation für eine Aufnahmeumgebung der Bildaufnahmeeinrichtung,
**dadurch gekennzeichnet, dass** die Stromversorgungskomponente eine erste Drahtlosladekomponente ist, wobei die erste Drahtlosladekomponente ausgelegt ist zum Empfangen von Ladung von einer in der elektronischen Vorrichtung enthaltenen zweiten Drahtlosladekomponente.

6. Beleuchtungselementaufsatz (101) nach Anspruch 5, wobei die Steueranweisung einen Beleuchtungselementparameter umfasst und der Beleuchtungselementparameter einen Modus des Beleuchtungselements und/oder eine Helligkeit des Beleuchtungselements umfasst; und
die Steuerkomponente ferner ausgelegt ist zum Steuern zum Einschalten des Beleuchtungselements basierend auf dem Beleuchtungselementparameter in der durch die elektronische Vorrichtung gesendeten empfangenen Steueranweisung.

7. Beleuchtungselementaufsatz (101) nach einem der Ansprüche 5 oder 6, wobei der Beleuchtungselementaufsatz ferner eine Erkennungskomponente umfasst und die Erkennungskomponente an der Befestigungskomponente angeordnet ist, wobei die Erkennungskomponente dazu ausgelegt ist, zu ermöglichen, dass die elektronische Vorrichtung den Beleuchtungselementaufsatz erkennt.

8. Beleuchtungselementaufsatz (101) nach Anspruch 7, wobei die Erkennungskomponente einen Magnetfeldsensor und/oder eine Nahfeldkommunikations- bzw. NFC-Komponente umfasst, wobei der Magnetfeldsensor ausgelegt ist zum Übertragen eines Magnetfeldsignals; und die NFC-Komponente ausgelegt ist zum Senden von NFC-Informationen an eine NFC-Komponente in der elektronischen Vorrichtung, wobei die NFC-Informationen verwendet werden, um Informationen über den Beleuchtungselementaufsatz anzugeben.

9. Elektronische Vorrichtung (150), umfassend einen Speicher (152) und einen Prozessor (151), wobei der Prozessor (151) Programmanweisungen in dem Speicher (152) ausführt, um zu ermöglichen, dass die elektronische Vorrichtung (150) die folgenden Schritte durchführt:
nach Erhalt einer Bildaufnahmestartanweisung, Bestimmen, ob ein verfügbarer Beleuchtungselementaufsatz vorhanden ist, wobei der Beleuchtungselementaufsatz ein Beleuchtungselement umfasst; und
nach Bestimmen, dass der verfügbare Beleuchtungselementaufsatz vorhanden ist, Starten einer Bildaufnahmeeinrichtung und Steuern zum Einschalten des Beleuchtungselements,
**dadurch gekennzeichnet, dass** die elektronische Vorrichtung (150) ferner eine Drahtlosladekomponente umfasst;
und der Prozessor ferner zu Folgendem ausgelegt ist:
nach dem Bestimmen, dass der verfügbare Beleuchtungselementaufsatz vorhanden ist, Steuern der ersten Drahtlosladekomponente in der elektronischen Vorrichtung zum Laden einer zweiten Drahtlosladekomponente in dem Beleuchtungselementaufsatz, wobei die Drahtlosladekomponente in dem Beleuchtungselementaufsatz zum Versorgen des Beleuchtungselements mit Strom ausgelegt ist.

10. Elektronische Vorrichtung (150) nach Anspruch 9, wobei der Prozessor (151) insbesondere zu Folgendem ausgelegt ist:
Erhalten eines Beleuchtungselementparameters des Beleuchtungselements, wobei der Beleuchtungselementparameter einen Modus des Beleuchtungselements und/oder eine Helligkeit des Beleuchtungselements umfasst; und
Steuern zum Einschalten des Beleuchtungselements basierend auf dem Beleuchtungselementparameter.

11. Elektronische Vorrichtung (15) nach einem der Ansprüche 9 oder 10, wobei der Prozessor insbesondere zu Folgendem ausgelegt ist:
Erhalten der Umgebungshelligkeit und/oder Helligkeit des durch die Bildaufnahmeeinrichtung aufgenommenen Bilds; und
wenn bestimmt wird, dass die Umgebungshelligkeit geringer als eine erste Schwelle ist und/oder die Helligkeit des durch die Bildaufnahmeeinrichtung aufgenommenen Bilds geringer als eine zweite Schwelle ist, Steuern zum Einschalten des Beleuchtungselements.

12. Elektronische Vorrichtung (150) nach einem der Ansprüche 9 bis 11, wobei die elektronische Vorrichtung ferner eine Anzeige umfasst, wobei
die Anzeige zu Folgendem ausgelegt ist: nachdem der Prozessor bestimmt, dass der verfügbare Beleuchtungselementaufsatz vorhanden ist, Anzeigen eines Beleuchtungselementsteuersymbols; und
der Prozessor ferner zu Folgendem ausgelegt ist: Empfangen einer durch einen Benutzer unter Verwendung des Beleuchtungselementsteuersymbols eingegebenen Steueranweisung und Steuern des Beleuchtungselements gemäß der Steueranweisung.

## Revendications

1. Procédé de commande d'éclairage d'appoint, appliqué à un dispositif électronique, le dispositif électronique comprenant un appareil de prise de vue, et le procédé comprenant :
suite à l'obtention d'une instruction de démarrage de prise de vue, la détermination (S1201) si un accessoire d'éclairage d'appoint est disponible ou non, l'accessoire d'éclairage d'appoint comprenant un éclairage d'appoint ; et
suite à la détermination (S1201) que l'accessoire d'éclairage d'appoint est disponible, le démarrage (S1202) de l'appareil de prise de vue, et la commande de l'allumage de l'éclairage d'appoint,
**caractérisé en ce que**
un composant de charge sans fil est agencé dans chacun du dispositif électronique et de l'accessoire d'éclairage d'appoint ; et, suite à la détermination que l'accessoire d'éclairage d'appoint est disponible, le procédé comprend en outre :
la commande (S505) du composant de charge sans fil dans le dispositif électronique de charger le composant de charge sans fil dans l'accessoire d'éclairage d'appoint, le composant de charge sans fil dans l'accessoire d'éclairage d'appoint étant configuré pour alimenter électriquement l'éclairage d'appoint.

2. Procédé selon la revendication 1, la commande (S505) de l'allumage de l'éclairage d'appoint comprenant :
l'obtention d'un paramètre d'éclairage d'appoint de l'éclairage d'appoint, le paramètre d'éclairage d'appoint comprenant : un mode de l'éclairage d'appoint et/ou une luminosité de l'éclairage d'appoint ; et
la commande de l'allumage de l'éclairage d'appoint sur la base du paramètre d'éclairage d'appoint.

3. Procédé selon l'une quelconque des revendications 1 ou 2, la commande (S505) de l'allumage de l'éclairage d'appoint comprenant :
l'obtention de la luminosité ambiante et/ou de la luminosité de la vue prise par l'appareil de prise de vue ; et
en cas de détermination que la luminosité ambiante est inférieure à un premier seuil et/ou que la luminosité de la vue prise par l'appareil de prise de vue est inférieure à un deuxième seuil, la commande de l'allumage de l'éclairage d'appoint.

4. Procédé selon l'une quelconque des revendications 1 à 3, le procédé comprenant en outre, suite à la détermination que l'accessoire d'éclairage d'appoint est disponible :
l'affichage d'une icône de commande d'éclairage d'appoint ;
la réception d'une instruction de commande entrée par un utilisateur à l'aide de l'icône de commande d'éclairage d'appoint ; et
la commande de l'éclairage d'appoint selon l'instruction de commande.

5. Accessoire d'éclairage d'appoint (101), comprenant : un éclairage d'appoint, un composant de fixation, un composant de communication, un composant de commande, et un composant d'alimentation électrique, l'éclairage d'appoint, le composant de communication, le composant de commande, et le composant d'alimentation électrique étant agencés sur le composant de fixation,
le composant de fixation étant configuré pour être assujetti à un dispositif électronique, et le dispositif électronique comprenant un appareil de prise de vue ;
le composant de communication étant configuré pour : recevoir une instruction de commande envoyée par le dispositif électronique, et envoyer l'instruction de commande au composant de commande ; et
le composant de commande étant configuré pour commander l'éclairage d'appoint selon l'instruction de commande, le composant d'alimentation électrique étant configuré pour alimenter électriquement l'éclairage d'appoint, et l'éclairage d'appoint étant configuré pour réaliser une compensation de lumière pour un environnement de prise de vue de l'appareil de prise de vue,
**caractérisé en ce que** le composant d'alimentation électrique est un premier composant de charge sans fil,
le premier composant de charge sans fil étant configuré pour recevoir une charge depuis un deuxième composant de charge sans fil contenu dans le dispositif électronique.

6. Accessoire d'éclairage d'appoint (101) selon la revendication 5, l'instruction de commande comprenant un paramètre d'éclairage d'appoint, et le paramètre d'éclairage d'appoint comprenant : un mode de l'éclairage d'appoint et/ou une luminosité de l'éclairage d'appoint ; et
le composant de commande étant configuré en outre pour commander l'allumage de l'éclairage d'appoint sur la base du paramètre d'éclairage d'appoint dans l'instruction de commande reçue envoyée par le dispositif électronique.

7. Accessoire d'éclairage d'appoint (101) selon l'une quelconque des revendications 5 ou 6, l'accessoire d'éclairage d'appoint comprenant en outre un composant de découverte, et le composant de découverte étant agencé sur le composant de fixation,
le composant de découverte étant configuré pour permettre au dispositif électronique de découvrir l'accessoire d'éclairage d'appoint.

8. Accessoire d'éclairage d'appoint (101) selon la revendication 7, le composant de découverte comprenant un capteur de champ magnétique et/ou un composant de communication en champ proche, NFC,
le capteur de champ magnétique étant configuré pour émettre un champ magnétique ; et
le composant NFC étant configuré pour envoyer des informations NFC à un composant NFC dans le dispositif électronique, les informations NFC étant utilisées pour indiquer des informations concernant l'accessoire d'éclairage d'appoint.

9. Dispositif électronique (150), comprenant une mémoire (152) et un processeur (151), le processeur (151) exécutant des instructions de programme dans la mémoire (152) pour permettre au dispositif électronique (150) de réaliser les étapes suivantes :
suite à l'obtention d'une instruction de démarrage de prise de vue, la détermination si un accessoire d'éclairage d'appoint est disponible ou non, l'accessoire d'éclairage d'appoint comprenant un éclairage d'appoint ; et
suite à la détermination que l'accessoire d'éclairage d'appoint est disponible, le démarrage d'un appareil de prise de vue, et la commande de l'allumage de l'éclairage d'appoint,
**caractérisé en ce que** le dispositif électronique (150) comprend en outre un premier composant de charge sans fil ;
et le processeur est configuré en outre pour :
suite à la détermination que l'accessoire d'éclairage d'appoint est disponible, commander au premier composant de charge sans fil dans le dispositif électronique de charger un deuxième composant de charge sans fil dans l'accessoire d'éclairage d'appoint, le composant de charge sans fil dans l'accessoire d'éclairage d'appoint étant configuré pour alimenter électriquement l'éclairage d'appoint.

10. Dispositif électronique (150) selon la revendication 9, le processeur (151) étant spécifiquement configuré pour :
obtenir un paramètre d'éclairage d'appoint de l'éclairage d'appoint, le paramètre d'éclairage d'appoint comprenant : un mode de l'éclairage d'appoint et/ou une luminosité de l'éclairage d'appoint ; et
commander l'allumage de l'éclairage d'appoint sur la base du paramètre d'éclairage d'appoint.

11. Dispositif électronique (15) selon l'une quelconque des revendications 9 ou 10, le processeur étant plus particulièrement configuré pour :
obtenir la luminosité ambiante et/ou la luminosité de la vue prise par l'appareil de prise de vue ; et
en cas de détermination que la luminosité ambiante est inférieure à un premier seuil et/ou que la luminosité de la vue prise par l'appareil de prise de vue est inférieure à un deuxième seuil, commander l'allumage de l'éclairage d'appoint.

12. Dispositif électronique (150) selon l'une quelconque des revendications 9 à 11, le dispositif électronique comprenant en outre un affichage,
l'affichage étant configuré pour : suite à la détermination, par le processeur, que l'accessoire d'éclairage d'appoint est disponible, afficher une icône de commande d'éclairage d'appoint ; et
le processeur étant configuré en outre pour : recevoir une instruction de commande entrée par un utilisateur à l'aide de l'icône de commande d'éclairage d'appoint, et commander l'éclairage d'appoint selon l'instruction de commande.
